# EUROPEAN PATENT SPECIFICATION

(11) **EP 1 564 653 B1**
(45) Date of publication and mention of the grant of the patent: **13.05.2009**
(21) Application number: 04250704.6
(22) Date of filing: 10.02.2004
(51) Int. Cl.: G06F 17/30, H04L 12/56

(54) **Apparatus and associated method for locking and identifying a change list used pursuant to database synchronization operations in a radio communication system**
Vorrichtung und zugeordnetes Verfahren zur Sperrung und Identifizierung einer Änderungsliste, die entsprechend von Datenbanksynchronisierungsabläufen in einem Funkkommunikationssystem verwendet wird
Appareil et méthode associée pour bloquage et identification d'une liste de changement utilisée conformément aux opérations de synchronisation d'une base de données dans un système de communication radio

(43) Date of publication of application: 17.08.2005
(73) Proprietor: Research In Motion Limited, Waterloo, Ontario N2L 3W8 (CA)
(72) Inventor: Yach, David Paul, Waterloo, Ontario, N2K 2N1 (CN); Linkert, Barry Warren, RR2 Petersbury, Ontario, N0B 2H0 (CN); Zhu, Jie, Ktchener, Ontario N2G 4Z7 (CN); Omar, Salim Hayder, Waterloo, Ontario, N2T 1Z1 (CN); Tysowski, Piotr K., Waterloo, Ontario N2K 2R2 (CN); Hecht-Enns, Albert, Waterloo, N2V 2S6 (CN); Phillips, Catherine, Waterloo, Ontario, N2T 2S5 (CN); Pereira, Kathy Ann, Waterloo, Ontario, N2V 2R7 (CN)
(74) Representative: Hibbert, Juliet Jane Grace

(56) References cited:
- EP-A- 0 794 646
- WO-A-01/69435
- US-B1- 6 449 622

## Description

The present invention relates generally to a manner by which to synchronize database copies, maintained at separate locations, by way of a radio air interface. More particularly, the present invention relates to apparatus, and an associated method, by which to facilitate synchronization of the database copies.

A change list is created, associated with a selected one of the database copies. When a decision is made to perform synchronization of the database copies, the change list is locked, preventing subsequent additions, deletions, or other alteration to the change list. And, the change list is identified with an identifier, uniquely to identify the change list. Locking and identifying the change list assures the integrity of the contents of the change list and better assures appropriate data comparisons during the synchronization operations by which to synchronize the database copies.

### BACKGROUND OF THE INVENTION

Many aspects of modem society require the availability, and use, of a modem communication system through which to communicate information to effectuate a communication service. Many varied types of communication systems have been developed and deployed, used to permit the effectuation of many different types of communication services. Additional technological advancements shall likely continue to permit new types of communication systems to be developed and deployed. Generally, new types of communication systems permit information to be communicated at increased, at improved efficiencies, permitting increasingly data-intensive communication services to be effectuated.

All communication systems include, at a minimum, a set of communication stations, interconnected by way of a communication channel. At least one of the communication stations forms a sending station, and another of the communication stations forms a receiving station. Information originated at, or otherwise provided to, the sending station is communicated therefrom upon the communication channel, to be delivered to the receiving station. The receiving station operates to recover the informational content of the detected information.

Some communication systems are one-way communication systems in which data is communicated in a single direction, i.e., from a sending station to a receiving station. Some other communication systems provide for two-way communications in which the communication stations operable therein are each capable of sending and receiving information. A communication station operable in a two-way communication system includes both receive and transmit parts to permit the communication of information from, and reception at, the respective communication stations.

A radio communication system is an exemplary type of communication system and is exemplary of a communication system that has benefited from technological advancements. A radio communication system is referred to as such for the reason that the communication channel upon which information is communicated is defined upon a radio link formed between sending and receiving stations of the radio communication system. Use of a radio communication system, in contrast to a conventional wireline communication system, provides various advantages. For instance, the costs associated with initial installment and deployment of a radio communication system are generally less than the corresponding costs required initially to install and deploy a conventional wireline communication system. And, a radio communication system is amenable for implementation as a mobile communication system. In a mobile communication system, mobility of communications is provided to one, or more, of the communication stations.

Technological advancements that are incorporated into communication systems include advancements in processing technologies. In general, technological advancements pertaining to processing technologies permit increasingly large amounts of data to be processed at increasingly quick rates. Modern data processing techniques permit large amounts of data to be stored and to be processed. Radio communication systems, as well as others, are regularly used through which to transport data that is subsequently processed through the use of data processing techniques. Various communication devices, and systems in which the communication devices are used, are available by which to perform various data processing operations and communication services.

Personal digital assistants (PDAs) are exemplary of communication devices that are used to perform various data processing, and other, operations. Other devices perform operations analogous to those performed by the personal digital assistants. Personal digital assistants are typically of small dimensions and are packaged in housings that permit hand-carriage of the personal digital assistants by the users thereof.

One, or more, databases are created and maintained at a personal digital assistant. The data stored thereat is selectably retrievable at the instruction of a user of the personal digital assistant. The database is formed of data that is, typically, formatted into a series of data records. Each data record contains one or more data fields populated with data. Upon instruction by the user, such as through actuation of a user actuator of the personal digital assistant, the data is retrieved from the database and displayed on a user display, or otherwise made available to the user. Typically, the user also is able to initiate processing operations, such as operations to sort, or otherwise to process, the data of the one or databases. Typically, also, the user of the personal digital assistant is able to add, delete, or otherwise alter the data stored at the databases.

Back-up procedures are performed to back-up the data stored at the personal digital assistant, or other analogous device, to facilitate recovery of the data in the event of loss of the data at the personal digital assistant. Data back-up procedures are carried out at selected intervals so that an up-to-data copy of the data remains available in the event of loss of the data at the device. Conventional personal digital assistants, for instance, sometimes provide for back-up of the stored information at a computer work station, or the like. Conventional back-up operations between a personal digital assistant and a computer work station make use of a fixed cable that interconnects the device and the computer work station. Once the data is backed-up, the back-up copy is available, if subsequently needed.

When the data is stored at more than one location, however, subsequent alteration of the data at any of the locations causes the back-up copy not to be a complete copy of the database. Any addition, deletion, or other alteration of any part of the data forming the database causes the copy no longer to be a complete copy of the database. Such alterations are asynchronous as the alterations are not performed uniformly at all of the databases. Content dissimilarities result, and the back-up copy is not a true copy of the other database.

To place the database and its copy back into complete conformity with each other, synchronization of the database and its copy is required. Synchronization operations, for instance, are performed during subsequent back-up operations. And, during a subsequent back-up operation, the data stored at the respective locations are compared together. Responsive to the comparisons, data found to be out-of-match with one another is first identified. Then, overwriting operations are performed upon the appropriate data portions to place the database and its back-up copy back in complete match with each other. Patent publication number WO 01/6943 A2, for instance, discloses a method relating to synchronization between a client and a server database.

Some portable devices make use of a radio air interface by which to carry out back-up and synchronization operations upon the data stored at the databases. Data back-up operations and data synchronization operations that are performed by way of a radio air interface are generally more problematical than operations performed by way of a conventional wireline connection. Bandwidth limitations, for instance, generally limit the communication capacity that is available by which to perform the back-up and synchronization operations. Conventional manners that are used to perform such operations are predicated upon ready availability of wireline connections in which bandwidth restrictions are not usually as stringent as bandwidth constrictions in a radio communication system.

Various problems associated with synchronization procedures by way of a radio air interface are, as a result, of concern. Improved manners by which better to provide for the back-up and synchronization of data by way of a radio air interface would therefore be advantageous.

It is in light of this background information related to synchronization procedures carried out upon databases located at separate locations and interconnected by way of a radio air interface, that the significant improvements of the present invention have evolved.

### SUMMARY OF THE INVENTION

The present invention, accordingly, advantageously provides apparatus according to claim 1, and an associated method according to claim 12, by which to synchronize database copies maintained at separate locations, by way of a radio air interface.

Through operation of an embodiment of the present invention, a manner is provided by which to facilitate synchronization of the database copies. Synchronization is performed to place the database copies in complete match with one another such that the data records forming each copy of the database are exact copies of one another.

According to the present invention, a change list is created, associated with a selected one of the database copies. When a decision is made to perform synchronization of the database copies, the change list is locked, preventing subsequent additions, deletions, or other alteration to the change list. Locking and identifying the change list better assures the integrity of the contents of the change list and better assures appropriate data comparisons during the synchronization operations by which to synchronize the database copies.

According to the present invention, a change list creator is utilized by which to create, and update, a change list prior to initiation of synchronization operations. The change list contains a listing of every change to a database with which the change list is associated. That is to say, each additional data record added to the database that is indicated in the database is also listed in the change list. And, deletions of data records at the database are correspondingly also listed in the change list. Additionally, any change to, addition to, or deletion of, a field of a data record of the database is also listed in the change list.

Change lists are, for instance, created and maintained, associated with each of the network copy and mobile copy of the database. Selection to initiate synchronization operations is made at either the network or at the mobile node. Once synchronization operations commence, the change list is utilized to synchronize the database copies with one another. The changes indicated on the change list are used to compare and, selectably, to overwrite a data record, or portion thereof, contained in a database copy as a result of the comparison of the data indicia.

According to the present invention, when the selection is made to commence with synchronization operations, a change list lock locks the change list so that additional entries into the change list are prohibited. And, once locked, the change list, or indications thereof, are communicated by way of the radio air interface pursuant to synchronization operations.

According to the present invention, a change list identifier forms a unique identifier that uniquely identifies the change list. The identifier selected by the change list identifier is, for instance, a numerical value that, at the device at which the database and the associated change list is embodied, is unique. In one implementation, a registry is maintained at the device at which the database and associated change list are embodied. The registry is populated with a value of a previously-used identifier that identified a prior change list used in a prior synchronization operation. When a subsequent synchronization operation is selected to commence, the change list is locked, and the registry is accessed to obtain the value populating the registry. The retrieved value is incremented, such as by an integer amount, and the value is used as the change list identifier to identify the newly-locked change list. Such value thereby uniquely identifies the change list at the device at which the database and change list are embodied, and the value is used during the synchronization operations to identify the change list. Because the change list is locked, the integrity of the contents of the change list, needed to ensure that the synchronization operations are carried out correctly, is assured. And, through identification of the change list, the change list is uniquely identified and provides a simple and small-bandwidth manner by which to identify the change list.

In these and other aspects, therefore, apparatus, and an associated method, is provided for a radio communication system. The radio communication system has a network part at which a network copy database is maintained and a mobile node at which a mobile copy database is maintained. Placement of data stored at a selected one of the network copy database and mobile copy database in synchronization with one another pursuant to a synchronization session is facilitated. A first change list creator is embodied at the selected one of the network copy database and mobile copy database. The first change list creator creates a first change list that lists change indicia of each change made to the selected one of the network copy database and mobile copy database during a selected period. A first change list lock selectably permits and prohibits changes to the first change list created by the first change list creator. The first change list lock locks the first change list, thereby to prohibit changes to the first change list, upon commencement of the synchronization session. The selected period is defined by locking of the first change list by the first change list lock.

A more complete appreciation of the present invention and the scope thereof can be obtained from the accompanying drawings that are briefly summarized below, the following detailed description of the presently-preferred embodiments of the invention, and the appended claims.

### BRIEF DESCRIPTION OF THE DRAWINGS

Figure 1 illustrates a functional block diagram of a radio communication system in which an embodiment of the present invention is operable.
Figure 2 illustrates a message sequence diagram representative of operation of an embodiment of the present invention in the radio communication system shown in Figure 1.
Figure 3 illustrates a method flow diagram listing the method steps of the method of operation of an embodiment of the present invention.

### DETAILED DESCRIPTION

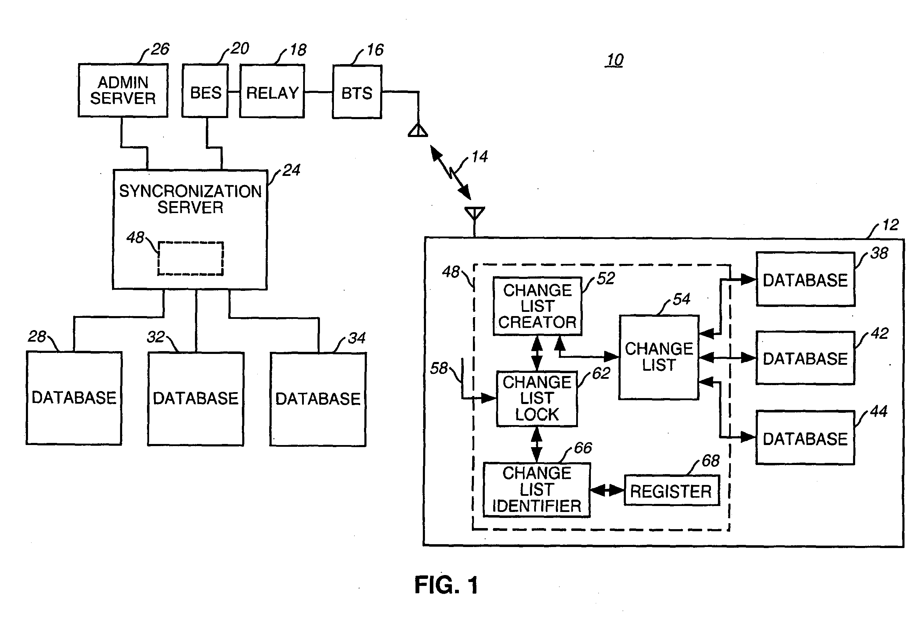

Referring first to Figure 1, a radio communication system, shown generally at 10, provides for radio communications between mobile nodes of which the mobile node 12 is exemplary and a fixed network part. The radio communication system is representative of any of various types of radio communication systems in which data is communicated by way of radio channels defined upon a radio air interface. The radio communication system is representative of, for instance, of a cellular communication system, such as a cellular communication system that operates generally pursuant to an operating specification, such as the GSM (Global System for Mobile communications) system.

Communication services are effectuated between the mobile node and the network part by sending data upon radio channels defined upon the radio air interface extending between the mobile node and the network part. Two-way communication of data is provided, permitting data to be sourced at the network part, and communicated to the mobile node as well as at the mobile node for communication to the network part. Data sourced at the mobile node is communicated by way of one or more uplink channels defined upon a radio uplink of the radio air interface. And, data originated, or otherwise provided to, the network part of the communication system is communicated by way of one or more downlink channels defined upon a radio downlink of the radio air interface to the mobile node. In the Figure, the arrow 14 represents the radio air interface and the uplink and downlink channels defined thereon.

A base transceiver station 16 forms part of the network part of the communication system. A coverage area is defined by the base transceiver station. The coverage area is sometimes referred to as a cell. And, when a mobile node, such as the mobile node 12, is positioned at a location encompassed by the cell, the mobile node is generally able to communicate by way of radio channels defined upon the radio air interface with the base transceiver station. Due to the mobility of the mobile node, the mobile node might, at successive times, be located in cells defined by successive base transceiver stations of the network part of the communication system. Communication handoffs with successive ones of the base transceiver stations are carried out to permit communications to continue with the mobile node as the mobile node travels through the successive cells.

A relay device 18 also forms part of the network part of the communication system. The relay device is coupled to a connectivity server, here a Blackberry ^{TM} Enterprise Server 2.0 (BES), and in turn, to the base transceiver station 16. A synchronization server 24 that also forms part of the network part of the communication system is coupled to the relay device. While the relay device and the synchronization server are represented as separate entities, in one implementation, the relay device and server are embodied on a common device or platform.

An administration (Admin) server 26 also forms part of the network part of the communication system. The administration server is coupled to the synchronization server. The administration server operates, amongst other things, to provide administration services to the communication system such as, for instance, administrative control over operation of the synchronization server.

Exemplary, network-based databases are embodied at, or are functionally coupled to, the synchronization server. In the Figure, three exemplary databases are shown. A first database 28, a Lotus ^{TM} Notes database, is coupled to the synchronization server 24. A second database 32, an Exchange ^{TM} Connector for an Exchange-based database is also functionally coupled to the synchronization server. And, a third database 34, a third-party database, is also functionally coupled to the synchronization server. Additional databases can also analogously be coupled to the synchronization server and analogously also shown in the Figure. The databases shown in the Figure are text-formatted, utilizing here an Extensible Mark-up Language (XML) format. In the exemplary implementation, each of the databases 28, 32, and 34 contain data records. The data records are formatted to include one or more data fields. And, the data fields are selectably populated with data values. Certain of the data fields also form key fields.

Databases corresponding to the databases 28, 32, and 34 are also embodied at the mobile node. Namely, a first database 38 that forms a Lotus ^{TM} Notes database, a database 42 that forms an Exchange-based database, and third database 44 that forms a third-party database are embodied at the mobile node. The databases 28 and 38, 32 and 42, and 34 and 44 are copies of one another, respectively.

While the database pairs 28-38, 32-42, and 34-44 are copies of one another, each of the databases is asynchronously updateable. When an asynchronous update is made to a database, the database pairs are no longer in complete match with one another. To place the databases of the database pairs back in match with one another, synchronization of the databases of the database pairs must be performed to place all of the data records of the databases of the respective database pairs back in match with one another.

Care must be exercised pursuant to the synchronization procedure that the data changes to a database be properly identified, and that such changes be timely identified to the other database of the database pair so that the same changes can be made to the other database, placing the databases of the database pairs back in match with one another.

To facilitate the synchronization of the data records of the respective databases, the mobile node includes apparatus, shown at 48, of an embodiment of the present invention. Corresponding apparatus is also embodied at the network part of the communication system, such as at the synchronization server thereof. The apparatus is functionally represented and is formed of functional entities that are implemented in any desired manner, such as, for instance, by algorithms executable by processing circuitry. The apparatus 48 facilitates synchronization operations by causing creation of a change list that indicates changes to a database with which the change list is associated. When synchronization operations are selected to commence, the apparatus causes the change list to become locked, and an identifier is assigned to the change list to define uniquely the change list.

Accordingly, the apparatus 48 includes a change list creator 52. The change list creator operates to create the change list that lists change indicia associated with changes made to the database, such as the database 38, 42, and 44 with which the change list creator is associated. Additions to the database, deletions from the database, and alterations to any field of any data record of the database also forms part of the change list created by the change list creator. The change list that is created by the change list creator is indicated by the block 54. Entries on the change list identify change indicia associated with any data record, or field thereof.

Additions to the change list are made, as needed, pending the selection of initiation of synchronization operations. When selection to initiate synchronization operations is made, an indication of the selection of the initiation is provided to the apparatus, here indicated by way of the line 58. The indication is provided to a change list lock 62 that operates to lock the change list to prohibit subsequent alteration of the change list. Thereby, the integrity of the change list at the instant at which the synchronization initiation is selected is assured.

The apparatus further includes a change list identifier 66. The change list identifier is also operable responsive to delivery of the apparatus of the indication of the selection to perform synchronization operations to provide an identifier that identifies uniquely the change list with respect to its associated database. Here, the identifier accesses a register 68 that stores a value of an identifier that had been used previously to identify a previously formed change list, used pursuant to a prior synchronization operation. In the exemplary implementation, the identifier selected by the identifier to identify the change list is an integer value, such as the value retrieved from the register, incremented by a unitary value. The identifier that identifies the change list, in one implementation, is communicated over the radio air interface pursuant to synchronization operations, at times separate from the change indicia contained in the change list, thereby to identify the change list by a single value, rather than requiring the entire change list to be communicated repeatedly.

Thereby, the apparatus 48 performs, or otherwise provides, functions that facilitate subsequent synchronization operations to be performed between database copies embodied at the mobile node and at the network part of the communication system. The change list is locked when the synchronization procedures are to be initiated, and the change list is identified with an identification value. The integrity of the contents of the change list is thereby assured, and the change list is uniquely identified pursuant to the synchronization operations.

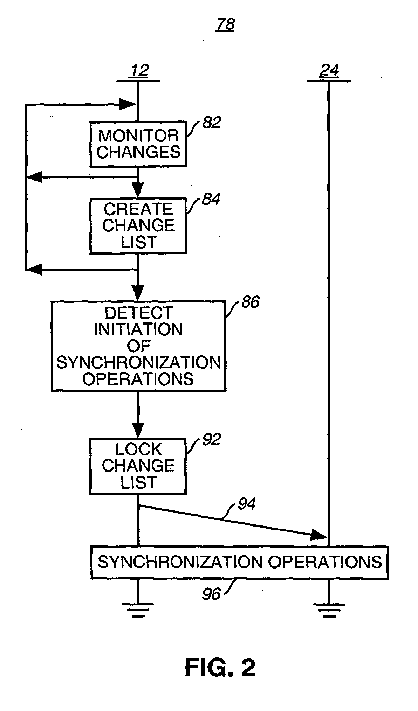

Figure 2 illustrates a message sequence diagram, shown generally at 78, representative of operation of the communication system 10, shown in Figure 1, to facilitate subsequent synchronization operations to be performed between database copies embodied at the mobile node and network part of the communication system. Operations shall be described with respect to the apparatus 48 embodied at the mobile node 12. Analogous description of operations can alternately, be made with respect to operation of the corresponding apparatus 48 embodied at the network part of the communication system.

Operations are therefore shown first to be performed at the mobile node at which changes to a database are monitored, as indicated by the block 82, and the change list is created, as indicated by the block 84. Monitoring continues until detection is made, indicated by the block 86, that the synchronization operations have been selected to be initiated. Then, and as indicated by the block 92, the change list is locked, and the change list is identified by a unique identifier. Thereafter, and as indicated by the segment 94, a message is sent by the mobile node to the network part to commence the synchronization operations. And, as indicated by the block 96, synchronization operations commence.

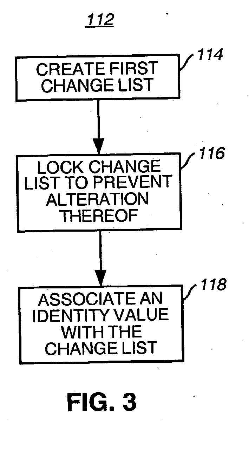

Figure 3 illustrates a method flow diagram, shown generally at 112, representative of the method of operation of the method of an embodiment of the present invention by which to facilitate synchronization of network-copy and mobile-copy databases in synchronization with one another pursuant to a synchronization session.

First, and as indicated by the block 114, a first list is created that lists change indicia of each change made to a selected one of the network copy database and the mobile copy database. Then, and as indicated by the block 116, the first change list is selectably locked, thereby to prohibit changes to the first change list upon commencement of the synchronization session.

Thereafter, and as indicated by the block 118, an identity value is associated with the change list created during the operation of creating. The identity value that is associated with the change list uniquely identifies the change list and, for instance, is obtained by incrementing a prior-used value used in a prior synchronization operation.

Thereby, through operation, the integrity of the change list is assured, and the change list is uniquely identified. Improved synchronization operations are thereby possible.

The previous descriptions are of preferred examples for implementing the invention, and the scope of the invention should not necessarily be limited by this description. The scope of the present invention is defined by the following claims:

## Claims

1. Apparatus (48) for a radio communication system (10) having a network part at which a network-copy database (28, 32, 34) is maintained and a mobile node (12) at which a mobile-copy database (38, 42, 44) is maintained, said apparatus (48) for facilitating placement of data stored at a selected one of the network-copy database (28, 32, 34) and mobile-copy database (38, 42, 44) in synchronization with one another pursuant to a synchronization session, said apparatus (48) comprising:
a first change list creator (52) embodied at the selected one of the network-copy database and mobile-copy database, said first change list creator configured to create a first change list (54) that lists change indicia of each change made to the selected one of the network-copy database and mobile-copy database during a selected period;
a first change list identifier (66), embodied at the selected one of the network-copy database and mobile-copy database, said first change list identifier providing an identifier to the first change list creator (52), said identifier uniquely identifying the first change list (54) that is made by the first change list creator (52) during said selected period; **characterised by**,
a first change-list lock (62) that selectably permits and prohibits changes to the first change list created by said first change list creator and which is identified by said identifier, said first change list lock configured to lock the first change list, thereby to prohibit changes to the first change list identified by said identifier, upon commencement (58) of the synchronization session, the selected period defined by locking of the first change list by said first change-list lock.

2. The apparatus (48) of claim 1 further comprising a change list identifier (66) configured to associate an identity value with the change list (54) created by said first change list creator (52), the identity value associated with the change list subsequent to locking thereof by said first change list lock.

3. The apparatus (48) of claim 2 wherein the identity value associated by said change list identifier (66) with the first change list created by said first change list creator (52) comprises a numerical value.

4. The apparatus (48) of claim 3 wherein the numerical value associated by said change list identifier (66) with the first change list uniquely identifies the first change list.

5. The apparatus (48) of claim 3 further comprising a register (68) configured to store at least a prior-associated value previously associated with a previously-used change list formed prior to a prior synchronization session, and wherein the identity value used by said change list identifier (66) is incrementally related to the prior-associated value.

6. The apparatus (48) of claim 5 wherein said change list identifier (66) increments the prior-associated value by an integer value to form the identity value.

7. The apparatus (48) of claim 1 wherein the synchronization session commences and said first change-list lock (62) locks the first change list (54) when selection is made to send the first change list (54) between the mobile node (12) and the network part.

8. The apparatus (48) of claim 2 wherein session state information is communicated between the mobile node (12) and the network part upon commencement of the synchronization session and wherein the identity value formed by said change list identifier (66) forms part of the session state information.

9. The apparatus (48) of claim 1 wherein, once locked by said first change-list lock (62) , the first change list (54) created by said first change list creator remains locked while at least one change indicia is contained in the first change list (54).

10. The apparatus (48) of claim 1 wherein the change indicia contained in the first change list (54) created by said change list creator (52) comprises new-record indicia representative of at least a first record added to the selected one of the network-copy database and mobile-copy database.

11. The apparatus (48) of claim 1 wherein the change indicia contained in the first change list (54) created by said change list creator comprises altered record indicia representative of at least a first change.

12. A method (78) in a radio communication system having a network part at which a network-copy database is maintained and a mobile node at which a mobile-copy database is maintained, said method for facilitating placement of data stored at a selected one of the network-copy database and mobile-copy database in synchronization with one another pursuant to a synchronization session, comprises
creating (84) a first list that lists change indicia of each change made to the selected one of the network copy database and the mobile copy database during a selected period;
associating a unique identifier with said first list, said unique identifier uniquely identifying said first list created during said selected period; **characterised by**,
locking (92) the first change list identified by said identifier, thereby to prohibit changes to the first change list, upon commencement (86) of the synchronization session, the selected period defined by locking of the first list created during the operation of creating.

13. The method (78) of claim 12 further comprising the operation of associating an identity value with the change list created during said operation of creating, the identity value associated with the change list subsequent to locking of the change list during said operation of selectably locking.

14. The method (78) of claim 13 wherein the identity value associated with the first change list during said operation of associating comprises a numerical value.

15. The method (78) of claim 14 wherein the numerical value associated during said operation of associating with the first change list uniquely identifies the first change list.

16. The method (78) of claim 13 further comprising the operation of storing at a register at least a prior-associated value previously associated with a previously-used change list formed prior to a prior synchronization session, and wherein the identity value used during said operation of associating is incrementally related to the prior-associated value.

17. The method (78) of claim 16 wherein said operation of associating comprises incrementing the prior-associated value by an integer value to form the identity value.

18. The method (78) of claim 12 wherein locking of the change list performed during said operation of locking is performed when selection is made to send the first change list between the mobile node and the network part.

19. The method (78) of claim 18 further comprising the operation, prior to said operation of selectably locking, of selecting to send the first change list between the mobile node and the network part.

20. The method (78) of claim 12 wherein, once locked during said operation of locking, the first change list remains locked while at least one change indicia is contained in the first change list.

## Patentansprüche

1. Vorrichtung (48) für ein Funkkommunikationssystem (10) mit einem Netzwerkteil, an dem eine Netzwerkkopiedatenbank (28, 32, 34) geführt wird, und einem mobilen Knoten (12), an dem eine Mobilvorrichtungskopiedatenbank (38, 42, 44) geführt wird, wobei die Vorrichtung (48) vorgesehen ist zur Erleichterung einer Platzierung von Daten, die gespeichert sind in einer ausgewählten der Netzwerkkopiedatenbank (28, 32, 34) und der Mobilvorrichtungskopiedatenbank (38, 42, 44), die miteinander gemäß einer Synchronisationssitzung synchronisiert sind, wobei die Vorrichtung (48) aufweist:
einen ersten Änderungsliste-Erzeuger (52), der in der ausgewählten der Netzwerkkopiedatenbank und der Mobilvorrichtungskopiedatenbank eingebettet ist, wobei der erste Änderungsliste-Erzeuger konfiguriert ist, eine erste Änderungsliste (54) zu erzeugen, die Änderungs-Indicia jeder Änderung auflistet, die an der ausgewählten der Netzwerkkopiedatenbank und der Mobilvorrichtungskopiedatenbank während einer gewählten Zeitdauer gemacht wird;
einen ersten Änderungsliste-Identifizierer (66), der in der ausgewählten der Netzwerkkopiedatenbank und der Mobilvorrichtungskopiedatenbank eingebettet ist, wobei der erste Änderungsliste-Identifizierer einen Identifizierer an den ersten Änderungsliste-Erzeuger (52) liefert, wobei der Identifizierer eindeutig die erste Änderungsliste (54) identifiziert, die durch den ersten Änderungsliste-Erzeuger (52) während der gewählten Zeitdauer erzeugt wird; **gekennzeichnet durch**
eine erste Änderungsliste-Sperre (62), die Änderungen an der ersten Änderungsliste selektiv erlaubt und verbietet, die **durch** den ersten Änderungsliste-Erzeuger erzeugt wird und die **durch** den Identifizierer identifiziert wird, wobei die erste Änderungsliste-Sperre konfiguriert ist, die erste Änderungsliste zu sperren, um Änderungen an der ersten Änderungsliste, die **durch** den Identifizierer identifiziert wird, bei Beginn (58) der Synchronisationssitzung zu verbieten, wobei die gewählte Zeitdauer definiert wird **durch** Sperren der ersten Änderungsliste **durch** die erste Änderungsliste-Sperre.

2. Vorrichtung (48) gemäß Anspruch 1, die weiter aufweist einen Änderungsliste-Identifizierer (66), der konfiguriert ist, einen Identitätswert der Änderungsliste (54) zuzuordnen, die durch den ersten Änderungsliste-Erzeuger (52) erzeugt wird, wobei der Identitätswert der Änderungsliste zugeordnet wird nachfolgend auf deren Sperren durch die erste Änderungsliste-Sperre.

3. Vorrichtung (48) gemäß Anspruch 2, wobei der Identitätswert, der durch den Änderungsliste-Indikator (66) der ersten Änderungsliste zugeordnet wird, die durch den ersten Änderungsliste-Erzeuger (52) erzeugt wird, einen numerischen Wert aufweist.

4. Vorrichtung (48) gemäß Anspruch 3, wobei der numerische Wert, der durch den Änderungsliste-Indikator (66) der ersten Änderungsliste zugeordnet wird, die erste Änderungsliste eindeutig identifiziert.

5. Vorrichtung (48) gemäß Anspruch 3, die weiter ein Register (68) aufweist, das konfiguriert ist zum Speichern zumindest eines vorher zugeordneten Werts, der vorher zugeordnet war zu einer vorher verwendeten Änderungsliste, die vor einer vorherigen Synchronisationssitzung gebildet wurde, und wobei der Identitätswert, der durch den Änderungsliste-Indikator (66) verwendet wird, inkrementell in Beziehung steht zu dem vorher zugeordneten Wert.

6. Vorrichtung (48) gemäß Anspruch 5, wobei der Änderungsliste-Identifizierer (66) den vorher zugeordneten Wert um einen ganzzahligen Wert inkrementiert, um den Identitätswert zu bilden.

7. Vorrichtung (48) gemäß Anspruch 1, wobei die Synchronisationssitzung beginnt und die erste Änderungsliste-Sperre (62) die erste Änderungsliste (54) sperrt, wenn eine Auswahl getroffen wird, die erste Änderungsliste (54) zwischen dem mobilen Knoten (12) und dem Netzwerkteil zu senden.

8. Vorrichtung (48) gemäß Anspruch 2, wobei Sitzungszustandsinformation zwischen dem mobilen Knoten (12) und dem Netzwerkteil bei Beginn der Synchronisationssitzung kommuniziert wird und wobei der Identitätswert, der durch den Änderungsliste-Identifizierer (66) gebildet wird, einen Teil der Sitzungszustandsinformation bildet.

9. Vorrichtung (48) gemäß Anspruch 1, wobei, sobald durch die erste Änderungsliste-Sperre (62) gesperrt, die erste Änderungsliste (54), die durch den ersten Änderungsliste-Erzeuger erzeugt wird, gesperrt bleibt, während zumindest ein Änderungs-Indicia in der ersten Änderungsliste (54) enthalten ist.

10. Vorrichtung (48) gemäß Anspruch 1, wobei die Änderungs-Indicia, die in der ersten Änderungsliste (54) enthalten sind, die von dem Änderungsliste-Erzeuger (52) erzeugt wird, "neuer Datensatz"-Indicia aufweisen, die für zumindest einen ersten Datensatz repräsentativ sind, der zu der ausgewählten der Netzwerkkopiedatenbank und der Mobilvorrichtungskopiedatenbank hinzugefügt wird.

11. Vorrichtung (48) gemäß Anspruch 1, wobei die Änderungs-Indicia, die in der ersten Änderungsliste (54) enthalten sind, die von dem Änderungsliste-Erzeuger erzeugt wird, geänderte Datensatz-Indicia aufweisen, die für zumindest eine erste Änderung repräsentativ sind.

12. Verfahren (78) in einem Funkkommunikationssystem mit einem Netzwerkteil, an dem eine Netzwerkkopiedatenbank geführt wird, und einem mobilen Knoten, an dem eine Mobilvorrichtungskopiedatenbank geführt wird, wobei das Verfahren vorgesehen ist zur Erleichterung einer Platzierung von Daten, die gespeichert sind in einer ausgewählten der Netzwerkkopiedatenbank und der Mobilvorrichtungskopiedatenbank, die miteinander gemäß einer Synchronisationssitzung synchronisiert sind, wobei das Verfahren aufweist:
Erzeugen (84) einer ersten Liste, die Änderungs-Indicia jeder Änderung auflistet, die an der ausgewählten der Netzwerkkopiedatenbank und der Mobilvorrichtungskopiedatenbank während einer gewählten Zeitdauer gemacht wird;
Zuordnen eines eindeutigen Identifizierers zu der ersten Liste, wobei der eindeutige Identifizierer eindeutig die erste Liste identifiziert, die während der gewählten Zeitdauer erzeugt wird; **gekennzeichnet durch**
Sperren (92) der ersten Änderungsliste, die **durch** den Identifizierer identifiziert wird, wodurch Änderungen an der ersten Änderungsliste verboten werden bei Beginn (86) der Synchronisationssitzung, wobei die gewählte Zeitdauer definiert wird **durch** Sperren der ersten Liste, die während der Operation des Erzeugens erzeugt wird.

13. Verfahren (78) gemäß Anspruch 12, das weiter aufweist die Operation eines Zuordnens eines Identitätswerts zu der Änderungsliste, die erzeugt wird während der Operation des Erzeugens, wobei der Identitätswert der Änderungsliste zugeordnet wird nachfolgend auf ein Sperren der Änderungsliste während der Operation eines selektiven Sperrens.

14. Verfahren (78) gemäß Anspruch 13, wobei der Identitätswert, welcher der ersten Änderungsliste während der Operation des Zuordnens zugeordnet wird, einen numerischen Wert aufweist.

15. Verfahren (78) gemäß Anspruch 14, wobei der numerische Wert, der während der Operation des Zuordnens der ersten Änderungsliste zugeordnet wird, die erste Änderungsliste eindeutig identifiziert.

16. Verfahren (78) gemäß Anspruch 13, das weiter aufweist die Operation des Speicherns an einem Register zumindest eines vorher zugeordneten Werts, der vorher zugeordnet war zu einer vorher verwendeten Änderungsliste, die vor einer vorherigen Synchronisationssitzung gebildet wurde, und wobei der Identitätswert, der während der Operation des Zuordnens verwendet wird, inkrementell in Beziehung steht zu dem vorher zugeordneten Wert.

17. Verfahren (78) gemäß Anspruch 16, wobei die Operation des Zuordnens ein Inkrementieren des vorher zugeordneten Werts um einen ganzzahligen Wert aufweist, um den Identitätswert zu bilden.

18. Verfahren (78) gemäß Anspruch 12, wobei ein Sperren der Änderungsliste, durchgeführt während der Operation des Sperrens, durchgeführt wird, wenn eine Auswahl getroffen wird, die erste Änderungsliste zwischen dem mobilen Knoten und dem Netzwerkteil zu senden.

19. Verfahren (78) gemäß Anspruch 18, das weiter aufweist, vor der Operation eines selektiven Sperrens, die Operation einer Auswahl, die erste Änderungsliste zwischen dem mobilen Knoten und dem Netzwerkteil zu senden.

20. Verfahren (78) gemäß Anspruch 12, wobei, sobald gesperrt während der Operation des Sperrens, die erste Änderungsliste gesperrt bleibt, während zumindest ein Änderungs-Indicia in der ersten Änderungsliste enthalten ist.

## Revendications

1. Appareil (48) pour un système (10) de communication radio ayant une partie de réseau à laquelle une base de données (28, 32, 34) de copie en réseau est conservée et un noeud mobile (12) auquel une base de données (38, 42, 44) de copie en mobile est conservée, ledit appareil (48) étant destiné à faciliter la mise en place de données stockées dans l'une, sélectionnée, de la base de données de copie en réseau (28, 32, 34) et de la base de données de copie en mobile (38, 42, 44) en synchronisme entre elles conformément à une session de synchronisation, ledit appareil (48) comportant :
un premier créateur (52) de liste de changement matérialisé à celle sélectionnée, de la base de données de copie en réseau et de la base de données de copie en mobile, ledit premier créateur de liste de changement étant configuré pour créer une première liste de changement (54) qui liste des indices de changement de chaque changement réalisé sur celle, sélectionnée, de la base de données de copie en réseau et de la base de données de copie en mobile au cours d'une période sélectionnée ;
un premier identifiant (66) de liste de changement, matérialisé à celle, sélectionnée, de la base de données de copie en réseau et de la base de données de copie en mobile, ledit premier identifiant de liste de changement procurant un identifiant au premier créateur (52) de liste de changement, ledit identifiant identifiant de façon unique la première liste de changement (54) qui est réalisée par le premier créateur (52) de liste de changement durant ladite période sélectionnée ;
**caractérisé par**
un premier verrou (62) de liste de changement qui permet et interdit sélectivement d'apporter des changements à la première liste de changement créée par ledit premier créateur de liste de changement et qui est identifié par ledit identifiant, ledit premier verrou de liste de changement étant configuré pour verrouiller la première liste de changement, empêchant ainsi des changements à la première liste de changement identifiée par ledit identifiant, à la suite du commencement (58) de la session de synchronisation, la période sélectionnée étant définie par le verrouillage de la première liste de changement par ledit premier verrou de liste de changement.

2. Appareil (48) selon la revendication 1, comportant en outre un identifiant (66) de liste de changement configuré pour associer une valeur d'identité à la liste de changement (54) créée par ledit premier créateur (52) de liste de changement, la valeur d'identité associée à la liste de changement étant ensuite destinée à verrouiller celle-ci par ledit premier verrou de liste de changement.

3. Appareil (48) selon la revendication 2, dans lequel la valeur d'identité associée par ledit identifiant (66) de changement à la première liste de changement créée par ledit premier créateur (52) de liste de changement comprend une valeur numérique.

4. Appareil (48) selon la revendication 3, dans lequel la valeur numérique associée par ledit identifiant (66) de liste de changement à la première liste de changement identifie de façon unique la première liste de changement.

5. Appareil (48) selon la revendication 3, comportant en outre un registre (68) configuré pour stocker au moins une valeur associée antérieure précédemment associée à une liste de changement utilisée précédemment, formée avant une session de synchronisation antérieure, et dans lequel la valeur d'identité utilisée par ledit identifiant (66) de liste de changement est liée de façon incrémentielle à la valeur associée antérieure.

6. Appareil (48) selon la revendication 5, dans lequel ledit identifiant (66) de liste de changement incrémente la valeur associée antérieure d'une valeur entière pour former la valeur d'identité.

7. Appareil (48) selon la revendication 1, dans lequel la session de synchronisation commence et ledit premier verrou (62) de liste de changement verrouille la première liste de changement (54) lorsqu'une sélection est réalisée pour envoyer la première liste de changement (54) entre le noeud mobile (12) et la partie de réseau.

8. Appareil (48) selon la revendication 2, dans lequel l'information d'état de session est communiquée entre le noeud mobile (12) et la partie de réseau à la suite du commencement de la session de synchronisation et dans lequel la valeur d'identité formée par ledit identifiant (66) de liste de changement fait partie de l'information d'état de session.

9. Appareil (48) selon la revendication 1, dans lequel, une fois verrouillée par ledit premier verrou (62) de liste de changement, la première liste de changement (54) créée par ledit premier créateur de liste de changement reste verrouillée tandis que la première liste de changement (54) contient au moins un signe de changement.

10. Appareil (48) selon la revendication 1, dans lequel le signe de changement contenu dans la première liste de changement (54) créée par ledit créateur (52) de liste de changement comprend un signe de nouvel enregistrement représentatif d'au moins un premier enregistrement ajouté à celle, sélectionnée, de la base de données de copie en réseau et de la base de données de copie en mobile.

11. Appareil (48) selon la revendication 1, dans lequel le signe de changement contenu dans la première liste (54) de changement créée par ledit créateur de liste de changement comprend un signe d'enregistrement modifié représentatif d'au moins un premier changement.

12. Procédé (78) dans un système de communication radio ayant une partie de réseau à laquelle une base de données de copie en réseau est conservée et un noeud mobile auquel une base de données de copie en mobile est conservée, ledit procédé, destiné à faciliter la mise en place de données stockées dans l'une, sélectionnée, de la base de données de copie en réseau et de la base de données de copie en mobile en synchronisme l'une avec l'autre conformément à une session de synchronisation, comprenant :
la création (84) d'une première liste qui liste des signes de changement de chaque changement réalisé sur celle, sélectionnée, de la base de données de copie en réseau et de la base de données de copie en mobile durant une période sélectionnée ;
l'association d'un identifiant unique à ladite première liste, ledit identifiant unique identifiant de façon unique ladite première liste créée durant ladite période sélectionnée ; **caractérisé par**
le verrouillage (92) de la première liste de changement identifiée par ledit identifiant, empêchant ainsi d'apporter des changements à la première liste de changement, à la suite du commencement (86) de la session de synchronisation, la période sélectionnée étant définie par un verrouillage de la première liste créée pendant l'opération de création.

13. Procédé (78) selon la revendication 12, comprenant en outre l'opération d'association d'une valeur d'identité à la liste de changement créée durant ladite opération de création, la valeur d'identité associée à la liste de changement étant destinée à verrouiller ensuite la liste de changement durant ladite opération de verrouillage sélectif.

14. Procédé (78) selon la revendication 13, dans lequel la valeur d'identité associée à la première liste de changement durant ladite opération d'association comprend une valeur numérique.

15. Procédé (78) selon la revendication 14, dans lequel la valeur numérique associée au cours de ladite opération d'association à la première liste de changement identifie de façon unique la première liste de changement.

16. Procédé (78) selon la revendication 13, comprenant en outre l'opération de stockage à un registre d'au moins une valeur associée antérieure précédemment associée à une liste de changement précédemment utilisée, formée avant une session de synchronisation antérieure, et dans lequel la valeur d'identité utilisée durant ladite opération d'association est liée de façon incrémentielle à la valeur associée antérieure.

17. Procédé (78) selon la revendication 16, dans lequel ladite opération d'association comprend l'incrémentation de la valeur associée antérieure par une valeur entière pour former la valeur d'identité.

18. Procédé (78) selon la revendication 12, dans lequel le verrouillage de la liste de changement effectué durant ladite opération de verrouillage est effectué lorsqu'une sélection est réalisée pour envoyer la première liste de changement entre le noeud mobile et la partie de réseau.

19. Procédé (78) selon la revendication 18, comprenant en outre l'opération, avant ladite opération de verrouillage sélectif, consistant à sélectionner pour envoi la première liste de changement entre le noeud mobile et la partie de réseau.

20. Procédé (78) selon la revendication 12, dans lequel, une fois verrouillée durant ladite opération de verrouillage, la première liste de changement reste verrouillée tandis que la première liste de changement contient au moins un signe de changement.
